# EUROPÄISCHE PATENTSCHRIFT

(11) **EP 4 167 041 B1**
(45) Veröffentlichungstag und Bekanntmachung des Hinweises auf die Patenterteilung: **08.07.2026**
(21) Anmeldenummer: 22201511.7
(22) Anmeldetag: 14.10.2022
(51) Int. Cl.: G05B 23/02

(54) **VERFAHREN UND VORRICHTUNG ZUR AUTOMATISCHEN ANALYSE EINES DIAGNOSESYSTEMS EINES FAHRZEUGS**
METHOD AND DEVICE FOR AUTOMATICALLY ANALYZING A VEHICLE DIAGNOSTIC SYSTEM
PROCÉDÉ ET DISPOSITIF D'ANALYSE AUTOMATIQUE D'UN SYSTÈME DE DIAGNOSTIC D'UN VÉHICULE

(30) Priorität: 15.10.2021 AT 508272021
(43) Veröffentlichungstag der Anmeldung: 19.04.2023
(73) Patentinhaber: AVL List GmbH, 8020 Graz (AT)
(72) Erfinder: Carrillo Ramirez, Nicolás, 8052 Graz (AT); Dasgupta, Anindya, 8051 Graz (AT); Ferreira Parrilla Alejandro, Alejandro, 8020 Graz (AT); Hirschmann, Julia, 8041 Graz (AT); Maletz, Michael, 8052 Graz (AT); Büyükevin, Eren, Istanbul (TR); Bilgin, Berk, Istanbul (TR); Aygün, Ulukan, Istanbul (TR)

(56) Entgegenhaltungen:
- DE-A1- 10 210 565
- DE-A1- 102005 011 748
- US-A1- 2003 014 229
- US-A1- 2008 004 764
- US-A1- 2012 005 532

## Beschreibung

Die Vorliegende Erfindung betrifft ein computerimplementiertes Verfahren zur automatischen Analyse eines On-Board-Diagnosesystems eines Fahrzeugs und eine Vorrichtung, die dazu eingerichtet ist, ein solches Verfahren durchzuführen.

### Einleitung

Es ist bekannt, dass Diagnosesysteme eines Fahrzeugs, wie beispielsweise On-Board-Diagnosesysteme (OBDs), der Selbstdiagnose und/oder der Erkennung von Fehlfunktionen im Fahrzeug dienen. In Fahrzeugen werden Diagnosesysteme dazu genutzt, während des Fahrbetriebs alle Systeme des Fahrzeugs, insbesondere alle abgasrelevanten Systeme des Fahrzeugantriebsstrangs zu überwachen und eventuell auftretende Fehler dem Fahrer anzuzeigen.

Weiter ist ebenfalls bekannt, dass in Diagnosesystemen auftretende Fehler dauerhaft gespeichert werden können, um diese später im Zuge einer Überprüfung des Fahrzeugs abfragen zu können. Im Rahmen der Fahrzeugdiagnose und insbesondere der OBD ist es erforderlich, einen klaren Überblick über alle an einem Fahrzeug vorhandenen Komponenten, Funktionen und Steuerungs- und Betriebssystemen zu haben, die jeweils unterschiedlich relevant für die OBD sein können. Die OBD-Relevanz der einzelnen Komponenten, Funktionen und Steuerungs- und Betriebssystemen hängt stark von der Architektur des Fahrzeugantriebsstrangs ab.

Systeme zur Diagnose von Fahrzeugen bestehen typischerweise aus einer Vielzahl von Komponenten wie beispielsweise Sensoren und Aktuatoren, die mittels Steuereinrichtungen (xCUs, x-Control units, wobei das x die zu steuernde Komponente angibt,) gesteuert werden. Steuereinrichtungen sind elektronische Module im Fahrzeug, die eigenständig Informationen aufnehmen und weitergeben. Die von Steuereinrichtungen durchgeführten Aufgaben umfassen beispielsweise die Steuerung der Lichtanlage, des Motors, der Anzeigeinstrumente oder des Antiblockiersystems. Die Komponenten und Steuereinrichtungen sind elektrisch und/oder signaltechnisch miteinander verbunden und bilden über die Verbindungen eine Netzwerkarchitektur ab. Die Netzwerkarchitektur des Systems zur Diagnose eines Fahrzeugs spielt eine zentrale Rolle in der Fahrzeug-Antriebsstrang-Architektur und der Identifikation von im Antriebsstrang auftretenden Fehlern.

Jede moderne Fahrzeug-Antriebsstrang-Architektur weist eine Vielzahl von Steuereinrichtungen auf. Neben den Steuereinrichtungen bilden Komponenten und Funktionen, die über Signale miteinander kommunizieren, ein komplexes Netzwerk eines On-Board-Diagnosesystems moderner Fahrzeuge. Aufgrund der Komplexität des On-Board-Diagnosesystems ist die Verfolgung und Rückverfolgung des Informationsaustauschs zwischen den Steuereinrichtungen und Komponenten eine gewaltige Aufgabe. Moderne Fahrzeuge enthalten etwa 30 Steuereinrichtungen mit durchschnittlich 300 OBD relevanten Funktionen pro Steuereinrichtung. On-Board-Diagnosesysteme übernehmen somit wesentliche Kommunikationsfunktionen in einem Fahrzeug und können daher auch als Kommunikationssysteme verstanden werden.

Grundsätzlich werden wesentliche Funktionen des Fahrzeugantriebsstrangs durch ein kumulatives Zusammenwirken mehrerer Funktionen verschiedener Steuergeräte erfüllt. Die Funktionen verschiedener in Reihe geschalteter Steuerungsgeräte können derart miteinander verbunden sein, dass eine Funktion eines ersten, vorgeschalteten Steuerungsgeräts einen Input für eine Analysefunktion eines zweiten, dem ersten Steuergerät nachgeschalteten Steuerungsgerät erzeugt. Dieser Umstand kann dazu führen, dass eine fehlerhafte Komponente im vorgeschalteten Steuerungsgerät eine von dieser Komponente abhängige Funktion im nachgeschalteten Steuerungsgerät beeinflusst. Hierdurch kann eine für die Diagnose relevante Analyse im nachgeschalteten Steuerungsgerät beeinflusst werden. Fehlersignale in einem On-Board-Diagnosesystem können ihren Ursprung somit nicht nur in einem Sensor, sondern auch in Komponenten von Steuereinrichtungen selbst haben. Es kann zur Identifikation des Ursprungs eines für die Diagnose relevanten Signals in einem On-Board-Diagnosesystem des Fahrzeugs daher hilfreich oder notwendig sein, die vollständige Architektur eines On-Board-Diagnosesystems zu kennen.

Die Kenntnis der Architektur eines On-Board-Diagnosesystems kann auch zur Erreichung von Systemintegrationskonformität notwendig sein. Unter Systemintegrationskonformität wird die Konformität des OBD-Systems mit gesetzlichen Vorgaben verstanden. Grundsätzlich gilt es, nachzuweisen, dass das On-Board-Diagnosesystem eine Reihe von Soll-Vorschriften erfüllt. Die Anforderungen an Systemintegrationskonformität für ein OBD-System sind vielfältig und komplex.

Bei der Signalverfolgung kann es im Fall von unüblichen Fehlfunktionen im On-Board-Diagnosesystem insbesondere im OBD-System vorkommen, dass die Identifikation der Fehlerquelle durchgeführt werden muss.

Aus dem Stand der Technik ist lediglich bekannt, diese Analyse manuell durchzuführen. Hierbei wird die Relevanz von jeder Komponente, Funktion und Steuer- und Betriebsanweisung für die Diagnose bzw. für die OBD bewertet. Aufgrund der Komplexität des Systems ist es hierzu regelmäßig notwendig, eine Vielzahl von Komponenten manuell zu analysieren, was jeweils mehrere hundert Stunden Arbeit erfordern kann. Daher ist es unter vertretbarem Aufwand praktisch unmöglich, die komplette Architektur eines OBD-Systems manuell abzubilden.

Aus dem Stand der Technik sind Verfahren bekannt, die Diagnosesysteme basierend auf Wahrscheinlichkeiten analysieren oder solche, die von vollständigen Informationen des Systems ausgehen und ausgehend von diesen Informationen detailliertere Analysen durchführen.

Beispielsweise offenbart die Patentschrift US 2003/0014229 A1 ein Verfahren zur Konstruktion eines Bayes-Netzes zur Abbildung und Diagnose eines technischen Systems mittels einer Systembeschreibung. Das Verfahren umfasst die folgenden Schritte: Konstruieren eines Systemeingangsknotens für jeden Systemeingang des Systems; Konstruieren eines Systemausgangsknotens für jeden Systemausgang des Systems; Abbilden aller Komponenten des Systems mittels Komponentenzustandsknoten, Komponenteneingangsknoten und Komponentenausgangsknoten; Konstruieren von Verknüpfungen zwischen Komponentenzustandsknoten verschiedener Komponenten mittels direkter logischer und/oder kausaler Beziehungen zwischen Funktionszuständen von Komponenten; Konstruieren von Verknüpfungen zwischen Komponentenzustandsknoten verschiedener Komponenten mittels direkter logischer und/oder kausaler Beziehungen zwischen Funktionszuständen von Komponenten; Konstruieren von Verknüpfungen zwischen Komponentenausgangsknoten und Komponenteneingangsknoten verschiedener Komponenten mittels Material-, Energie- und/oder Informationsflüssen im System; Konstruieren von Verknüpfungen zwischen Systemeingangsknoten und Komponenteneingangsknoten mittels Material-, Energie- und/oder Informationsflüssen im System; und Konstruieren von Verknüpfungen zwischen Komponentenausgangsknoten und Systemausgangsknoten mittels Material-, Energie- und/oder Informationsflüssen im System.

Die Patentschrift DE 10 2005 011 748 A1 offenbart ein Verfahren zum Diagnostizieren von eingebetteten Systemen, insbesondere von eingebetteten Systemen in Kraftfahrzeugen, wobei das eingebettete System eine Eingabeeinrichtung zum Eingeben von Eingangssignalen, eine Verarbeitungseinrichtung zur Erzeugung von Verarbeitungssignalen in Abhängigkeit von zumindest einem der Eingangssignale und eine Ausgabeeinrichtung zur Ausgabe von Ausgabesignalen in Abhängigkeit von zumindest einem der Verarbeitungssignale aufweist.

Ferner offenbart Dokument US 2008/004764 A1 einen Fahrzeugdiagnosedatensammler/- analysator, der historische Fahrzeugdiagnosedaten zusammenstellt, einschließlich gemessener Betriebsparameter von einer Reihe verschiedener Fahrzeuge, die unter einer Vielzahl normaler Fahrzeugbetriebsbedingungen und Fahrzeugkomponentenausfallbedingungen betrieben werden und führt statistische Analysen an verschiedenen Fahrzeugtyp/Betriebsbedingungskombinationen durch, um Betriebsparameterbereiche festzulegen, die normalen Betriebsbedingungen und verschiedenen Ausfallbedingungen entsprechen.

Die Erfindung ermöglicht, eine vollständige Karte der Architektur eines On-Board-Diagnosesystems auf automatischem Wege zu erstellen. Weiterhin wird durch die Erfindung ermöglicht, eine vollständige Signalverfolgung und Signalrückverfolgung zwischen Komponenten, Funktionen, Signalen und Steuereinrichtungen des On-Board-Diagnosesystems durchzuführen. Die Erfindung ermöglicht auch, eine Wirkkettenanalyse für die OBD-Systemintegrationskonformität durchführen. Durch die Kenntnis der vollständigen Architektur eines OBD-Systems wird ermöglicht, mit geringem Aufwand festzustellen, ob sämtliche für eine OBD-Systemintegrationskonformität notwendigen Diagnosen für jeden OBD-relevanten Sensor durchgeführt werden.

Aus dem Stand der Technik ist kein Verfahren bekannt, das diese Tätigkeit automatisch ausführen kann, weder für eine einzelne Steuereinrichtung noch für komplexe Fahrzeug-Antriebsstrang-Architekturen mit mehreren Steuereinrichtungen. Darüber hinaus ist kein Verfahren bekannt, dass im Falle einer beliebigen Fehlfunktion eines OBD-Systems eine Fehleridentifikation mit Hilfe der Wirkkettenanalyse automatisch durchführen kann.

Der vorliegenden Erfindung liegt somit die Aufgabe zugrunde, ein Verfahren bereitzustellen, um eine automatische Analyse der Funktionen eines On-Board-Diagnosesystems durchzuführen und insbesondere eine OBD-Relevanz aller Elemente des Fahrzeugverbundes automatisch zu ermitteln.

Erfindungsgemäß wird diese Aufgabe gelöst, durch ein Verfahren nach Anspruch 1 und einer Vorrichtung nach Anspruch 9.

Ein erster Aspekt der Erfindung betrifft ein computerimplementiertes Verfahren zur automatischen Analyse eines On-Board-Diagnosesystems eines Fahrzeugs, um die vollständige Architektur des On-Board-Diagnosesystems zu ermitteln, wobei das On-Board-Diagnosesystem ein oder mehrere Steuereinrichtungen, die dazu eingerichtet sind, ein oder mehrere Funktionen auszuführen, und wobei das On-Board-Diagnosesystem ein oder mehrere Komponenten aufweist, umfassend die Schritte: Importieren von Steuereinrichtung-Beschreibungsdateien des On-Board-Diagnosesystems, wobei durch jede der Steuereinrichtung-Beschreibungsdateien die relevanten Datenobjekte einer der einen oder mehreren Steuereinrichtungen festgelegt sind; Importieren von Kommunikations-Dateien des On-Board-Diagnosesystems, wobei in jeder Kommunikations-Datei Signal-Sendeparameter und Signal-Empfangsparameter der einen oder mehreren Steuereinrichtungen und/oder der einen oder mehreren Komponenten des On-Board-Diagnosesystems des Fahrzeugs festgelegt sind; Durchführen einer Textanalyse in den importierten Steuereinrichtung-Beschreibungsdateien und den Kommunikations-Dateien; Identifizieren von Steuereinrichtungen, Komponenten, Funktionen und Signalen des On-Board-Diagnosesystems des Fahrzeugs aus dem Ergebnis der Textanalyse; und Erstellen einer Karte des On-Board-Diagnosesystems des Fahrzeugs, wobei die Karte die identifizierten Steuereinrichtungen, Funktionen, Komponenten und Signale des On-Board-Diagnosesystems des Fahrzeugs umfasst.

Als Fahrzeuge im Sinne der Erfindung werden jegliche Verkehrsmittel verstanden, die dem Transport von Personen, Gütern oder Werkzeugen dienen. Insbesondere werden Kraftfahrzeuge als Fahrzeuge im Sinne der Erfindung verstanden. Weiterhin sind mit Fahrzeugen im Sinne der Erfindung sowohl Landfahrzeuge als auch Wasserfahrzeuge und Luftfahrzeuge sowie deren Kombinationen gemeint.

Die Ermittlung der vollständigen Architektur des On-Board-Diagnosesystems ist ein früher Schritt im Entwicklungsprozess von On-Board-Diagnosesystemen von Fahrzeugen und muss zu einem Zeitpunkt durchgeführt werden, an dem die miteinander interagierenden Steuereinrichtungen, Komponenten und ihre Funktionen bereits festgelegt wurden, deren Anzahl, Eigenschaften und Interaktion durch Signale miteinander aber noch nicht auf einer übergeordneten Ebene erfasst wurde. Dieser Schritt ist notwendig, um anschließend die Relevanz der Steuereinrichtungen, Komponenten, Funktionen und Signale des On-Board-Diagnosesystems für eine durchzuführende On-Board-Diagnose ermitteln zu können. Als Analyse wird eine Untersuchung verstanden, die dazu dient, die Architektur, insbesondere die vollständige Architektur, des On-Board-Diagnosesystems zu ermitteln.

Steuereinrichtungen im Sinne der Erfindung sind elektronische Module im Fahrzeug, die eigenständig Informationen aufnehmen und weitergeben.

Komponenten sind physische Bauteile des On-Board-Diagnosesystems, insbesondere Sensoreinrichtungen, oder Aktuatoren. Sensoreinrichtungen sind elektronische Bauteile, die bestimmte physikalische oder chemische Eigenschaften und/oder die stoffliche Beschaffenheit ihrer Umgebung qualitativ oder quantitativ erfassen können. Zu den Sensoreinrichtungen können beispielsweise ein Anschnallsensor, eine Lambda-Sonde, ein Drehzahlsensor, ein Regensensor, ein Lenkradwinkelsensor, ein Tankfüllstandsensor, Beschleunigungssensoren für einen Airbag, oder andere Sensoreinrichtungen im Fahrzeug gehören.

Eine erfindungsgemäße Steuereinrichtung-Beschreibungsdatei enthält alle Informationen über die relevanten Datenobjekte in der Steuereinrichtung. Relevante Datenobjekte können beispielsweise zu messende Parameter, Kennfelder eines Motors, reale und virtuelle Messgrößen, Strukturen des Aufbaus der Steuereinrichtung, Funktionen, die von der Steuereinrichtung ausführbar sind und Variablenabhängigkeiten sein. Für jedes dieser Objekte werden Informationen wie Speicheradresse, Ablagestruktur, Datentyp und Umrechnungsvorschriften zur Wandlung in physikalische Einheiten benötigt und festgelegt. Ferner umfasst eine Steuereinrichtung-Beschreibungsdatei üblicherweise auch die Parameter für die Kommunikation zwischen XCP-Master und XCP-Slave im Steuergerät, wobei XCP das XCP Mess- und Kalibrierprotokoll ("Universal Measurement and Calibration Protocol") bezeichnet. Das XCP Mess- und Kalibrierprotokoll koordiniert die Kalibrierung von Parametern und den Test der elektronischen Steuereinrichtungen. Es ermöglicht den Lese- und Schreibzugriff auf Variablen bzw. Speicherinhalte von Mikrocontroller-Systemen zur Laufzeit. Darüber hinaus ermöglicht es auch die Programmierung eines Flash-Speichers. Steuereinrichtung-Beschreibungsdateien können beispielsweise ASAP2-Beschreibungsdateien bzw. A2L-Dateien sein.

Grundsätzlich werden alle Steuereinrichtung-Beschreibungsdateien und alle Kommunikations-Dateien importiert sowie alle Steuereinrichtungen, Komponenten, Funktionen und Signale des On-Board-Diagnosesystems des Fahrzeugs aus dem Ergebnis der Textanalyse identifiziert. Hierdurch wird ermöglicht, eine vollständige Karte des On-Board-Diagnosesystems des Fahrzeugs zu erstellen. Insbesondere bei einem hohen Vernetzungsgrad zwischen den einzelnen Steuereinrichtungen, Komponenten, Funktionen und Signalen ist der Import aller Steuereinrichtungs-Beschreibungsdateien und Kommunikationsdateien notwendig, um die Karte zu erstellen. Grundsätzlich ist aber auch denkbar, insbesondere bei einem niedrigen Vernetzungsgrad zwischen einzelnen Steuereinrichtungen, Komponenten, Funktionen und Signale, dass unwesentliche Steuereinrichtung-Beschreibungsdateien und unwesentliche Kommunikations-Dateien vom Import ausgenommen werden. Entsprechende Steuereinrichtungen, Komponenten, Funktionen und Signalen sind in diesem Fall auch von einer Identifikation ausgenommen.

Erfindungsgemäße Kommunikations-Dateien legen die Funktionen für die Verknüpfungen zwischen den Steuereinrichtung-Beschreibungsdateien fest und bilden damit üblicherweise eine von den Steuereinrichtung-Beschreibungsdateien separate Einheit. Die Kommunikations-Dateien enthalten alle Informationen über die Verknüpfungen zwischen den Steuereinrichtungen und zwischen Steuereinrichtungen und Komponenten des On-Board-Diagnosesystems. Es ist grundsätzlich auch denkbar, dass Steuereinrichtungs-Beschreibungsdateien und Kommunikations-Dateien in einer gemeinsamen Dateistruktur abgebildet sind. In der Kommunikations-Datei wird insbesondere festgelegt, welches Steuergerät welche Signale unter welchen Bedingungen und mit welcher Zykluszeit sendet, welches Steuergerät ein bestimmtes Signal empfängt sowie die Normierung der Signale, d. h. wie hexadezimale Größen in physikalische oder logische Größen umgerechnet werden und welche Prioritäten die Signale erhalten. Ein Signal enthält eine konkrete zu übertragende Informationseinheit.

Eine Textanalyse umfasst Analyseverfahren zur Erkennung von Bedeutungsstrukturen in den importierten Dateien. Hierdurch lassen sich Komponenten, Steuereinrichtungen, Funktionen und Signale automatisch identifizieren. Die Textanalyse kann insbesondere als ein Parsing-Algorithmus ausgestaltet sein oder einen Parsing-Algorithmus umfassen, wobei der Parsing-Algorithmus die in den analysierten Dateien enthaltenen Informationen in ein zur Weiterverarbeitung geeignetes Format umwandelt.

Als Komponenten im Sinne der Erfindung werden die physischen Bestandteile des On-Board-Diagnosesystems verstanden, mit Ausnahme der Steuereinrichtungen. Zu den Komponenten können Sensoren oder Aktuatoren gehören. Signale sind jegliche konkret zu übertragene Informationen. Zur Übertragung eines Signals werden Verbindungen, wie ein Bus-System oder Einzelverbindungen Steuereinrichtungen und/oder Komponenten. Zu den Signalen gehören Eingangssignale, interne Signale und Ausgangssignale jeder Funktion der Steuereinrichtungen als auch Signale, die zwischen Komponenten, zwischen Steuereinrichtungen und zwischen Komponenten und Steuereinrichtungen ausgetauscht werden.

Als erfindungsgemäße Karte wird eine die Karteninformation enthaltene Einheit verstanden. Hiervon sind sowohl zweidimensionale Repräsentationen der Karteninformationen, aber beispielsweise auch Karteninformationen in Tabellenform oder räumliche Darstellungen mit umfasst. Insbesondere kann die Karte auch ein Modell des On-Board-Diagnosesystems sein. Eine Karte im Sinne des Anspruchs bedeutet insbesondere eine grafische oder textliche Beschreibung der identifizierten Steuereinrichtungen, Funktionen, Komponenten und Signale des On-Board-Diagnosesystems des Fahrzeugs.

Ein zweiter Aspekt der Erfindung betrifft eine Vorrichtung, die dazu eingerichtet ist, ein Verfahren gemäß dem ersten Aspekt der Erfindung durchzuführen.

Weitere Aspekte der Erfindung betreffen ein Computerprogramm und ein Computer-lesbares Medium.

Vorzugsweise umfasst das Verfahren ferner den Schritt: Wiedergabe der Karte auf einem Display.

Als Display wird jede Vorrichtung zur Visualisierung verstanden. Das Display kann beispielsweise ein Bildschirm oder Computermonitor sein.

In einer besonderen Ausführungsform der Erfindung umfasst das Verfahren ferner den Schritt: Erstellen eines Berichts, der ein Ergebnis der automatischen Analyse enthält.

In einer weiteren vorteilhaften Ausgestaltung des Verfahrens umfasst das Verfahren ferner den Schritt: Identifizieren von allen von dem On-Board-Diagnosesystem durchführbaren Diagnosen.

Hierbei ist es besonders vorteilhaft, wenn das Verfahren ferner die Schritte umfasst: Vergleichen der durchführbaren Diagnosen mit ein oder mehreren Soll-Diagnosen; und Identifizieren der Unterschiede.

Hierdurch lässt sich beispielsweise eine Systemintegrationskonformität des On-Board-Diagnosesystems testen, wenn als Soll-Diagnosen, die zur Erfüllung gesetzlicher Vorgaben notwendigen und/oder die zur Erreichung einer entsprechenden Norm, beispielsweise ISO9141, ISO14230 oder ISO15765, vorgesehenen Diagnosen genutzt werden.

In einer besonderen Ausführungsform der Erfindung kann vorgesehen sein, dass das Verfahren ferner den Schritt umfasst: Durchführen einer Relevanzbewertung für die On-Board-Diagnose aller Komponenten, Steuereinrichtungen, Funktionen und Signale.

Eine Relevanzbewertung für die On-Board-Diagnose bedeutet insbesondere, eine Bewertung der Relevanz der jeweiligen Komponenten, Steuereinrichtungen, Funktionen und Signale für das Abgassystem, und/oder das Sicherheitssystem des Fahrzeugs.

Erfindungsgemäß umfasst das Verfahren ferner die Schritte: a) Bereitstellen der Karte des On-Board-Diagnosesystems; b) Empfangen eines diagnoserelevanten Signals von einer vorgeschalteten Steuereinrichtung; c) Markieren der vorgeschalteten Steuereinrichtung als diagnoserelevant; d) Markieren von allen Steuereinrichtungen, Komponenten, Funktionen und Signalen, die mit der Erzeugung des diagnoserelevanten Signals und der in Schritt c) markierten Steuereinrichtung in unmittelbarer Verbindung stehen, als diagnoserelevant; e) Wiederholen der Schritte b) bis d), sofern in Schritt d) wenigstens eine weitere Steuereinrichtung als diagnoserelevant markiert wurde; oder alternativ: f) Lokalisieren des Ursprungs des diagnoserelevanten Signals durch Rückverfolgung.

Insbesondere kann auch vorgesehen sein, dass alle diagnoserelevanten oder OBD-relevanten Signale, Funktionen, Betriebsarten und Betriebsstrategien in einem On-Board-Diagnosesystem eines Fahrzeugs lokalisiert werden. Sofern das On-Board-Diagnosesystem ein OBD-System ist oder umfasst, können unter diagnoserelevanten Signalen, Funktionen, Betriebsarten und Betriebsstrategien OBD-relevante Signale, OBD-relevante Funktionen, OBD-relevante Betriebsarten und OBD-relevante Betriebsstrategien in einem On-Board-Diagnosesystem eines Fahrzeugs verstanden werden.

Durch dieses Verfahren lässt sich der Ursprung eines im On-Board-Diagnosesystem angezeigten Signals lokalisieren. Ein diagnoserelevantes Signal kann insbesondere ein mit dem Abgassystem eines Fahrzeugs in Zusammenhang stehendes Signal sein. Von den diagnoserelevanten Signalen ausgenommen sind beispielsweise Signale, die nicht mit sicherheitstechnischen und/oder abgasrelevanten Aspekten des Fahrzeugs in Zusammenhang stehen. Zu diesen gehören beispielsweise Signale, die mit der Steuerung der Temperatur im Fahrzeuginneren in Zusammenhang stehen. Die unmittelbare Umgebung einer Steuereinrichtung wird, durch die dieser Steuereinrichtung nächstliegenden Steuereinrichtungen begrenzt, wobei die nächstliegenden Steuereinrichtungen selbst noch Teil der unmittelbaren Umgebung sind. Als Fahrzeug kann insbesondere ein Fahrzeugverbund verstanden werden, der alle miteinander in Verbindung stehenden Komponenten, Funktionen und Systeme eines Fahrzeugs beschreibt.

Unter einer erfindungsgemäßen vorgeschalteten Steuereinrichtung wird eine Steuereinrichtung verstanden, die sich in Signalrichtung vor einer nachgeschalteten Steuereinrichtung befindet.

Ein durch das On-Board-Diagnosesystem laufendes Signal hat grundsätzlich eine festgelegte Signalrichtung. Durch die Signalrichtung ist eine vorgeschaltete Steuereinrichtung gegenüber einer nachgeschalteten Steuereinrichtung eindeutig definiert. Werden die Schritte a) bis c) des Verfahrens zur Lokalisierung eines diagnoserelevanten Signals wiederholt, ist die vorgeschaltete Steuereinrichtung in jeder Wiederholdung eine andere.

Die Markierung von allen Komponenten, Funktionen und Signalen in der vorgeschalteten Steuereinrichtung kann in der Karte des On-Board-Diagnosesystems mit dargestellt werden.

In einer weiteren vorteilhaften Ausführungsform der Erfindung wird die Textanalyse mittels künstlicher Intelligenz durchgeführt.

Unter künstlicher Intelligenz im Sinne der Erfindung wird die Anwendung von maschinellem Lernen in künstlichen neuronalen Netzen verstanden. Insbesondere kann hierbei vorgesehen sein, dass die künstliche Intelligenz linguistische Datenverarbeitung nutzt.

Alternativ zu der letztgenannten besonderen Ausführungsform der Erfindung kann vorgesehen sein, dass die Textanalyse mittels eines genetischen Algorithmus durchgeführt wird.

Ferner liefert die Erfindung eine Vorrichtung, die dazu eingerichtet ist, ein Verfahren nach einem der Ansprüche 1 bis 8 durchzuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine schematische Darstellung des Signaleingangs einer Steuereinrichtung eines On-Board-Diagnosesystems eines Fahrzeugs,
- Figur 2: eine Darstellung eines Verfahrens zur automatischen Analyse eines On-Board-Diagnosesystems eines Fahrzeugs gemäß einer besonderen Ausführungsform der Erfindung,
- Figur 3: eine schematische Darstellung einer Karte eines On-Board-Diagnosesystems,
- Figur 4: eine Darstellung eines Verfahrens zur Lokalisierung eines diagnoserelevanten Signals gemäß einer besonderen Ausführungsform der Erfindung, und
- Figur 5: eine schematische Darstellung der Karte des On-Board-Diagnosesystems aus Figur 4, in dem eine mögliche Lokalisierung des Ursprungs eines diagnoserelevanten Signals dargestellt ist.

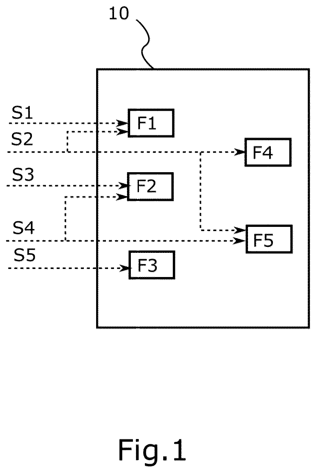

Figur 1 zeigt eine schematische Darstellung des Signaleingangs einer Steuereinrichtung 10 eines On-Board-Diagnosesystems eines Fahrzeugs. Von der Steuereinrichtung 10 werden mehrere Funktionen F1 bis F5 durchgeführt. Die Funktionen erhalten jeweils ein oder mehrere Signale S1 bis S5 als Eingangssignale. Jedes der Signale kann von ein oder mehreren Funktionen empfangen und genutzt werden. In diesem Beispiel wird das Signal S1 als Eingangssignal von der Funktion F1 empfangen, das Signal S2 als Eingangssignal von den Funktionen F1, F4 und F5 empfangen, das Signal S3 von der Funktion F2 empfangen, das Signal S4 von den Funktionen F2 und F5 empfangen, und das Signal S5 von der Funktion F3 empfangen. Diese schematische Darstellung stellt eine Vereinfachung eines realen Signaleingangs an einer Steuereinrichtung dar, bei dem typischerweise eine größere Anzahl von Funktionen und Signalen auf komplexere Art verarbeitet werden.

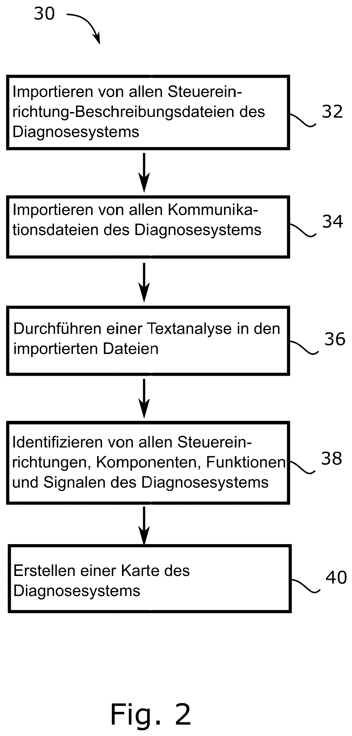

Figur 2 zeigt eine Darstellung eines Verfahrens 30 zur automatischen Analyse eines On-Board-Diagnosesystems eines Fahrzeugs gemäß einer besonderen Ausführungsform der Erfindung. Das Verfahren ist computerimplementiert, was bedeutet, dass die Schritte des Verfahrens mit einem Computer durchgeführt werden. Die Schritte werden grundsätzlich automatisch durchgeführt, laufen also entsprechend einer zuvor programmierten Art und Weise ab. Das On-Board-Diagnosesystem weist mehrere Steuereinrichtungen und ein oder mehrere Sensoreinrichtungen auf.

In einem ersten Schritt 32 des Verfahrens 30 werden alle Steuereinrichtung-Beschreibungsdateien des On-Board-Diagnosesystems importiert. Durch jede der Steuereinrichtung-Beschreibungsdateien sind die relevanten Datenobjekte einer Steuereinrichtung festgelegt.

In einem zweiten Schritt 34 des Verfahrens werden allen Kommunikations-Dateien des On-Board-Diagnosesystems importiert. In jeder Kommunikations-Datei sind Signal-Sendeparameter und Signal-Empfangsparameter von ein oder mehreren Steuereinrichtungen und/oder Komponenten des On-Board-Diagnosesystems festgelegt.

In einem dritten Schritt 36 des Verfahrens 30 wird eine Textanalyse in den importierten Steuereinrichtung-Beschreibungsdateien und den Kommunikationsdateien durchgeführt. Die Textanalyse wird durch einen ersten Parsing-Algorithmus durchgeführt. Dieser erste Parsing-Algorithmus nutzt die im A2L-Standard definierten Befehle, um die in den Steuereinrichtungs-Beschreibungsdateien und Kommunikationsdateien festgelegten Anweisungen aufzubereiten, dass diese weiterverarbeitet werden. Der erste Parsing-Algorithmus analysiert die Steuereinrichtung-Beschreibungsdateien und die Kommunikationsdateien somit vollständig. Nach der Durchführung des dritten Schritts liegt somit eine vollständige Liste der Signale, Funktionen, Steuereinrichtungen und Komponenten des On-Board-Diagnosesystems vor. Die Liste kann jedoch ungeordnet und/oder unzusammenhängend sein.

In einem vierten Schritt 38 des Verfahrens 30 werden alle Steuereinrichtungen, Komponenten, Funktionen und Signale des On-Board-Diagnosesystems identifiziert. Hierzu wird das Ergebnis der Textanalyse genutzt. Dieses Ergebnis wird mit einem zweiten Parsing-Algorithmus analysiert, sodass alle Signale, Funktionen, Steuereinrichtungen und Komponenten des On-Board-Diagnosesystems identifiziert werden. Der zweite Parsing-Algorithmus kann beispielsweise mittels Matlab/Simulink, C++ oder C# umgesetzt werden. Nach der Durchführung des zweiten Parsing-Algorithmus sind die Signale, Funktionen, Steuereinungseinrichtungen und Komponenten einander entsprechend ihrer Funktion im On-Board-Diagnosesystem zugeordnet.

In einem fünften Schritt 40 des Verfahrens 30 wird eine Karte des On-Board-Diagnosesystems erstellt, wobei die Karte die identifizierten Steuereinrichtungen, Funktionen, Komponenten und Signale des On-Board-Diagnosesystems umfasst. Das Erstellen der Karte umfasst im Wesentlichen die Darstellung der Zuordnung der identifizierten Steuereinrichtungen, Funktionen, Komponenten und Signale des On-Board-Diagnosesystems zueinander. Die Karte ist damit nicht nur auf eine zweidimensionale Darstellung beschränkt, sondern kann auch in dreidimensionaler, rein textueller Form dargestellt werden oder eine andere abstraktere Form haben. Die Karte stellt eine vollständige Abbildung des On-Board-Diagnosesystems dar und kann vorzugsweise ein vollständiges Systemmodell des On-Board-Diagnosesystems umfassen. Der fünfte Schritt 40 ist beispielsweise in der Modellierungssprache SysML implementiert.

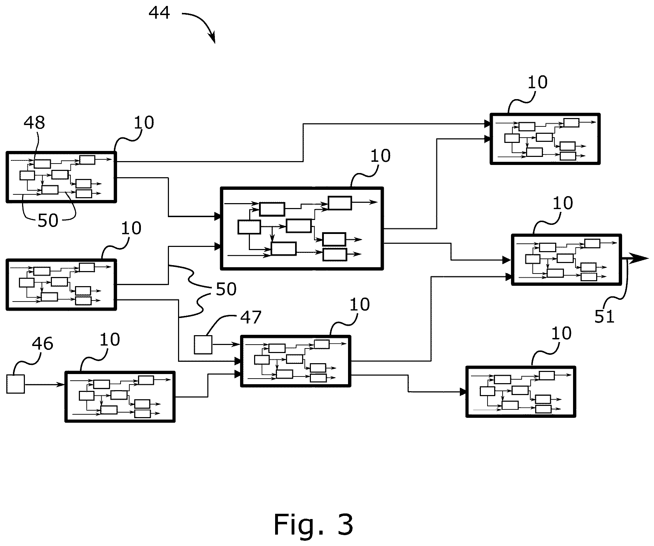

Figur 3 zeigt eine schematische Darstellung einer Karte 44 eines On-Board-Diagnosesystems, wie sie nach einem erfindungsgemäßen Verfahren 30 zur Analyse eines On-Board-Diagnosesystems eines Fahrzeugs erstellt wird. Die Karte 44 zeigt mehrere Steuereinrichtungen 10. Innerhalb der Steuereinrichtungen 10 sind die von der Steuereinrichtung 10 ausgeführten Funktionen 48 schematisch dargestellt. Die Steuereinrichtungen 10 sind über Signale 50 miteinander verbunden, wobei Signale 50 auch innerhalb der Steuereinrichtungen 10 zwischen Funktionen 48 gesendet werden. Neben den von anderen Steuereinrichtungen 10 empfangenen Signalen 50 können auch Komponenten wie Sensoren 46 oder Aktuatoren 47 Signale 50 an Steuereinrichtungen 10 senden. Weiterhin zeigt die Karte 44 einen Signalausgang 51 einer der Steuereinrichtungen 10, an dem ein Signal 50 ausgegeben wird und ausgelesen werden kann. Die Signalrichtung, in der die Signale 50 verlaufen ist festgelegt und durch die Pfeilrichtung der Signale 50 angegeben. Die schematische Darstellung der Karte 44 ist gegenüber einer Karte 44 eines realen On-Board-Diagnosesystems vereinfacht, indem nicht alle der Steuereinrichtungen 10, Funktionen 48, Komponenten und Signalen 50 dargestellt sind. Der Signalverlauf ist ebenfalls nur schematisch dargestellt und in seiner Komplexität gegenüber einem realen On-Board-Diagnosesystem vereinfacht.

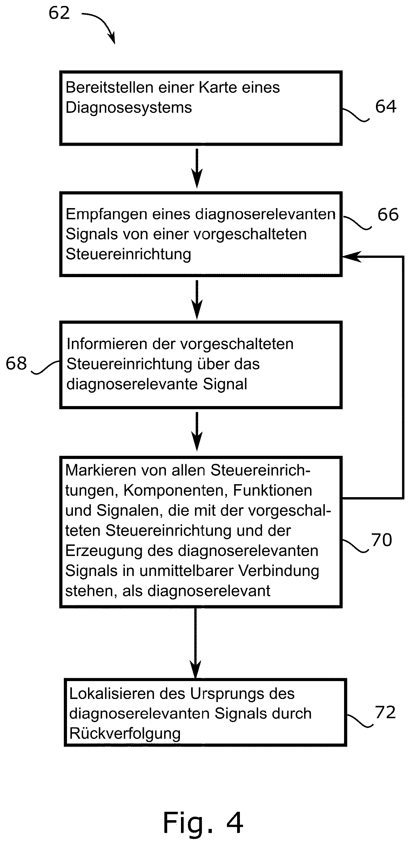

Figur 4 zeigt ein Verfahren 62 zur Lokalisierung eines diagnoserelevanten Signals. Das Verfahren zur Lokalisierung eines diagnoserelevanten Signals stellt eine mögliche Erweiterung des in Figur 2 beschriebenen Verfahrens 30 zur automatischen Analyse eines On-Board-Diagnosesystems eines Fahrzeugs dar und wird im Folgenden auch als zweites Verfahren 62 bezeichnet, auch wenn die Verfahren miteinander zusammenhängen. Das zweite Verfahren 62 umfasst die im folgenden beschriebenen Schritte.

In einem ersten Schritt 44 des zweiten Verfahrens 62 wird eine Karte 44 eines On-Board-Diagnosesystems bereitgestellt, wobei die Karte 44 mit einem Verfahren nach einem der Ansprüche 1 bis 6 erstellt wurde. Dieser erste Schritt 44 kann auch durch ein Verfahren 30 zur Analyse eines On-Board-Diagnosesystems eines Fahrzeugs nach einem der Ansprüche 1 bis 6 ersetzt werden, mit dem eine solche Karte erstellt wird.

In einem zweiten Schritt 66 des zweiten Verfahrens 62 wird ein diagnoserelevantes Signal von einer vorgeschalteten Steuereinrichtung 10 empfangen. Die Steuereinrichtungen 10 fungieren als Knotenpunkte innerhalb des On-Board-Diagnosesystems. Über die Steuereinrichtungen 10 werden Signale 50 geleitet. Diagnoserelevante Signale, die an einem Signalausgang 51 gemessen werden, sind daher stets über eine Steuereinrichtung 10 weitergeleitet worden.

In einem dritten Schritt 68 des zweiten Verfahrens 62 wird eine vorgeschaltete Steuereinrichtung 10 über das diagnoserelevante Signal informiert. Die vorgeschaltete Steuereinrichtung 10 kann einem Signalausgang oder einer anderen Steuereinrichtung 10 vorgeschaltet sein. Die Beziehung, welche Steuereinrichtung 10 welcher vorgeschaltet ist, bezieht sich auf den im Betrieb des On-Board-Diagnosesystems vorgesehenen Signalverlauf. Eine vorgeschaltete Steuereinrichtung 10 sendet somit im Betrieb des On-Board-Diagnosesystems Signale an andere, nachgeschaltete Steuereinrichtungen 10, nicht jedoch umgekehrt. Ein Signal 50 kann somit im Betrieb der On-Board-Diagnoseeinrichtung zunächst in einer vorgeschalteten Steuereinrichtung 10 und anschließend in der nachgeschalteten Steuereinrichtung oder dem Signalausgang ankommen.

In einem vierten Schritt 70 des zweiten Verfahrens 62 werden allen Steuereinrichtungen 10, Komponenten, Funktionen 48 und Signale 50, die mit der Erzeugung des diagnoserelevanten Signals in unmittelbarer Verbindung stehen, als diagnoserelevant markiert. Dieser vierte Schritt 70 des zweiten Verfahrens 62 wird von einer Steuereinrichtung 10 durchgeführt. Jede Steuereinrichtung 10 kann nur in ihrer unmittelbaren Umgebung Steuereinrichtungen 10, Komponenten, Funktionen 48 und Signale 50 identifizieren und markieren, die mit dem diagnoserelevanten Signal in Verbindung stehen. Im vierten Schritt 70 des zweiten Verfahrens 62 werden daher nur die in der jeweiligen Steuereinrichtung 10 durchgeführten Funktionen 48 und die in unmittelbarer Verbindung zur Steuereinrichtung 10 stehenden Komponenten und Signale 50 markiert. Im komplexen Netzwerk eines On-Board-Diagnosesystems kann eine einzelne Steuereinrichtung 10 nicht den vollständigen Pfad des diagnoserelevanten Signals bis zu seinem Ursprung zurückverfolgen. Aus diesem Grund wird der Prozess der Rückverfolgung iterativ durchgeführt.

Nach einem ersten Durchgang, also einer ersten Durchführung der Schritte 2 bis 4 des zweiten Verfahrens 68 werden, sofern mindestens eine weitere Steuereinrichtung 10 als diagnoserelevant markiert wird, der zweite Schritt 66, der dritte Schritt 68 und der vierte Schritt 70 des zweiten Verfahrens 62 wiederholt. In der ersten Wiederholung dieser Schritte wird eine Steuereinrichtung 10 als "vorgeschaltete Steuereinrichtung" bezeichnet, die der Steuereinrichtung 10 vorgeschaltet ist, die im ersten Durchgang als "vorgeschaltete Steuereinrichtung" bezeichnet war. Werden der zweite Schritt 66, der dritte Schritt 68 und der vierte Schritt 70 des zweiten Verfahrens 62 in dem iterativen Verfahren mehrfach wiederholt, wird in jeder Wiederholung eine weiter vorgeschaltete Steuereinrichtung 10 über ein diagnoserelevantes Signal informiert und zur Markierung von diagnoserelevanten Steuereinrichtungen 10, Komponenten, Funktionen 48 und Signalen 50 genutzt. Der Markierungsprozess markiert somit schrittweise entgegen der im Betrieb der Diagnosevorrichtung vorgesehenen Signalrichtung Steuereinrichtungen 10, Komponenten, Funktionen und Signale.

Die Steuereinrichtungen 10 fungieren als Knotenpunkte im On-Board-Diagnosesystem, sodass ein diagnoserelevantes Signal stets über eine oder mehrere Steuereinrichtungen 10 gesendet wird. Sofern keine zusätzlichen Steuereinrichtungen 10 mehr als diagnoserelevant markiert werden, kann daher der Ursprung des diagnoserelevanten Signals einer Komponente oder einer Funktion eindeutig zugeordnet werden. Die Schleife des zweiten Verfahrens 62 wird daher nicht mehr durchgeführt, sobald keine Steuereinrichtungen 10, sondern ausschließlich Komponenten, Funktionen 48 und/oder Signale 50 als diagnoserelevant markiert werden. Die am weitesten vorgeschaltete Komponente oder Funktion 48 entspricht dem Ursprung des diagnoserelevanten Signals.

Im fünften Schritt 72 des zweiten Verfahrens 62 wird der Ursprung des diagnoserelevanten Signals durch Rückverfolgung lokalisiert. Aufgrund der Vollständigkeit der Karte 44 kann das diagnoserelevante Signal 54 einem Ursprung eindeutig zugeordnet werden.

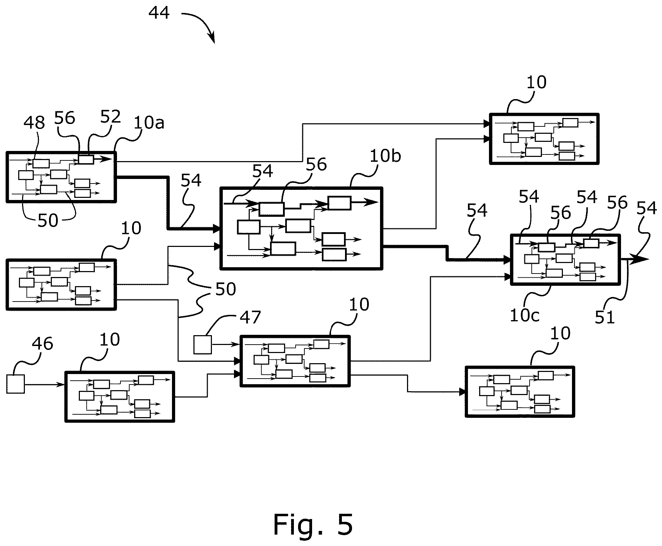

Figur 5 zeigt eine schematische Darstellung der Karte 44 des Diagnosesystems aus Figur 3, in dem die Lokalisierung des Ursprungs 52 eines diagnoserelevanten Signals angezeigt ist. Wie in Figur 3 sind auf der schematischen Darstellung der Karte 44 des Diagnosesystems Steuereinrichtungen 10, Signale 50 und Funktionen 48 innerhalb der Steuereinrichtungen 10 dargestellt. Mit einem diagnoserelevanten Signal 54 in Zusammenhang stehende Steuereinrichtungen 10 sind mit den spezifischen Bezugszeichen 10a, 10b und 10c gekennzeichnet. Die Steuereinrichtungen 10a, 10b und 10c sind in Signalrichtung in dieser Reihenfolge geschaltet. Die Signalrichtung verläuft in Figur 5 von links nach rechts.

Wird an einem Signalausgang 51 des On-Board-Diagnosesystems ein diagnoserelevantes Signal 54 detektiert, kann es zurückverfolgt werden, indem die mit dem Signalausgang 51 verbundene Steuereinrichtung 10c über den Empfang des diagnoserelevanten Signals 54 informiert wird. Die Steuereinrichtung 10c hat Kenntnis und/oder Kontrolle über Steuereinrichtungen 10, Komponenten, Funktionen 48 und Signale 50, mit denen sie in unmittelbarem Zusammenhang steht. Die Steuereinrichtung 10c überprüft, welche der Steuereinrichtungen 10, Komponenten, Funktionen 48 und Signale 50, auf die sie Zugriff hat, mit dem diagnoserelevanten Signal 54 in unmittelbarer Verbindung stehen und markiert diese ebenfalls als diagnoserelevant. In der schematischen Darstellung in Figur 5 sind diagnoserelevant markierte Steuereinrichtungen 10, Funktionen 48 und Signale 50 durch eine größere Linienbreite kenntlich gemacht. Hierzu gehören diagnoserelevante Funktionen 56 und diagnoserelevante Signale 54 innerhalb der Steuereinrichtung 10c, ein weiteres diagnoserelevantes Signal 54, das von Steuereinrichtung 10b an die Steuereinrichtung 10c gesendet wird und die Steuereinrichtung 10b selbst, die der Steuereinrichtung 10c vorgeschaltet ist. Nach dieser Markierung führt die vorgeschaltete Steuereinrichtung 10b den Prozess fort und markiert wiederum alle Steuereinrichtungen 10, Komponenten, Funktionen 56 und Signale 54, die in unmittelbarer Umgebung der Steuereinrichtung 10b stehen und mit dem diagnoserelevanten Signal 54 in Zusammenhang stehen als diagnoserelevant. Auf diese Weise wird eine Steuereinrichtung 10b vorgeschaltete Steuereinrichtung 10a als diagnoserelevant markiert. Die Steuereinrichtung 10a führt die gleichen Prozessschritte wie die ebenfalls diagnoserelevanten Steuereinrichtungen 10b und 10c zuvor aus und identifiziert und markiert eine diagnoserelevante Funktion 48 innerhalb der Steuereinrichtung 10a, aber keine weitere Steuereinrichtung 10. Nachdem keine weitere Steuereinrichtung 10 als diagnoserelevant markiert wurde, wird der Ursprung 52 des diagnoserelevanten Signals 54 auf die diagnoserelevante Funktion 56 innerhalb der Steuereinrichtung 10a lokalisiert und die iterativen Prozessschritte zur Lokalisierung nicht weitergeführt.

Die voranstehende Erläuterung der Ausführungsformen beschreibt die vorliegende Erfindung ausschließlich im Rahmen von Beispielen. Die Erfindung ist im beigefügten Anspruchssatz beschrieben.

### Bezugszeichenliste

- 10: Steuereinrichtung
- 10a, 10b, 10c: diagnoserelevante Steuereinrichtung
- 30: Verfahren zur automatischen Analyse eines Diagnosesystems eines Fahrzeugs
- 32: erster Schritt
- 34: zweiter Schritt
- 36: dritter Schritt
- 38: vierter Schritt
- 40: fünfter Schritt
- 44: Karte des On-Board-Diagnosesystems
- 46: Sensor
- 47: Aktuator
- 48: Funktion
- 50: Signal
- 51: Signalausgang
- 52: Ursprung eines diagnoserelevanten Signals
- 54: diagnoserelevantes Signal
- 56: diagnoserelevante Funktion
- 62: Verfahren zur Lokalisierung eines diagnoserelevanten Signals (zweites Verfahren)
- 64: zweiter Schritt des zweiten Verfahrens
- 66: dritter Schritt des zweiten Verfahrens
- 68: vierter Schritt des zweiten Verfahrens
- 68: fünfter Schritt des zweiten Verfahrens

## Patentansprüche

1. Computerimplementiertes Verfahren (30) zur automatischen Analyse eines On-Board-Diagnosesystems eines Fahrzeugs, um die vollständige Architektur des On-Board Diagnosesystems zu ermitteln, wobei das On-Board-Diagnosesystem ein oder mehrere Steuereinrichtungen (10) aufweist,
die dazu eingerichtet sind, ein oder mehrere Funktionen auszuführen, und wobei das On-Board-Diagnosesystem des Fahrzeugs ein oder mehrere Komponenten aufweist, umfassend die Schritte:
Importieren von Steuereinrichtung-Beschreibungsdateien des On-Board-Diagnosesystems, wobei durch die Steuereinrichtung-Beschreibungsdateien die relevanten Datenobjekte einer der einen oder mehreren Steuereinrichtungen (10) festgelegt sind;
Importieren von Kommunikations-Dateien des On-Board-Diagnosesystems, wobei in jeder Kommunikations-Datei Signal-Sendeparameter und Signal-Empfangsparameter der einen oder mehreren Steuereinrichtungen (10) und/oder der einen oder mehreren Komponenten des On-Board-Diagnosesystems festgelegt sind;
Durchführen einer Textanalyse in den importierten Steuereinrichtung-Beschreibungsdateien und den Kommunikations-Dateien;
Identifizieren von Steuereinrichtungen (10), Komponenten, Funktionen (48) und Signalen (50) des On-Board-Diagnosesystems des Fahrzeugs aus dem Ergebnis der Textanalyse; und
Erstellen einer Karte des On-Board-Diagnosesystems des Fahrzeugs, wobei die Karte die identifizierten Steuereinrichtungen (10), Funktionen (48), Komponenten und Signale (50) des On-Board-Diagnosesystems des Fahrzeugs umfasst, wobei das Verfahren die Schritte umfasst:
a) Bereitstellen der Karte des On-Board-Diagnosesystems;
b) Empfangen eines diagnoserelevanten Signals von einer vorgeschalteten Steuereinrichtung (10);
c) Markieren der vorgeschalteten Steuereinrichtung (10) als diagnoserelevant;
d) Markieren von allen Steuereinrichtungen (10), Komponenten, Funktionen (48) und Signalen (50), die mit der Erzeugung des diagnoserelevanten Signals (54) und der in Schritt c) markierten Steuereinrichtung (10) in unmittelbarer Verbindung stehen, als diagnoserelevant;
e) Wiederholen der Schritte b) bis d), sofern in Schritt d) wenigstens eine weitere Steuereinrichtung (10) als diagnoserelevant markiert wurde; oder alternativ
f) Lokalisieren des Ursprungs des diagnoserelevanten Signals (54) durch Rückverfolgung.

2. Verfahren (30) nach Anspruch 1, wobei das Verfahren ferner den Schritt umfasst:
Wiedergabe der Karte auf einem Display.

3. Verfahren (30) nach einem der vorhergehenden Ansprüche, wobei das Verfahren ferner den Schritt umfasst: Erstellen eines Berichts, der ein Ergebnis der automatischen Analyse enthält.

4. Verfahren (30) nach einem der vorhergehenden Ansprüche, wobei das Verfahren ferner den Schritt umfasst:
Identifizieren von allen von dem On-Board-Diagnosesystem durchführbaren Diagnosen.

5. Verfahren (30) nach Anspruch 4, wobei das Verfahren ferner die Schritte umfasst:
Vergleichen der mit dem On-Board-Diagnosesystem durchführbaren Diagnosen mit ein oder mehreren Soll-Diagnosen; und
Identifizieren der Unterschiede.

6. Verfahren (30) nach einem der vorherigen Ansprüche, wobei das Verfahren ferner den Schritt umfasst:
Durchführen einer Relevanzbewertung für die On-Board-Diagnose aller Komponenten, Steuereinrichtungen (10), Funktionen (48) und Signale (50).

7. Verfahren (30, 62) nach einem der vorhergehenden Ansprüche, wobei die Textanalyse mittels künstlicher Intelligenz durchgeführt wird.

8. Verfahren (30, 62) nach einem der Ansprüche 1 bis 6, wobei die Textanalyse mittels eines genetischen Algorithmus durchgeführt wird.

9. Vorrichtung, umfassend Mittel zur Ausführung des Verfahrens (30, 62) nach einem der Ansprüche 1 bis 8.

10. Computerprogramm, umfassend Befehle, die bei der Ausführung des Programms durch einen Computer diesen veranlassen, die Schritte des Verfahrens nach einem der Ansprüche 1 bis 8 auszuführen.

11. Computer-lesbares Medium, auf dem ein Computerprogramm nach Anspruch 10 gespeichert ist.

## Claims

1. Computer-implemented method (30) for automatically analyzing a vehicle's on-board diagnostic system to determine the complete architecture of the on-board diagnostic system, wherein the on-board diagnostic system comprises one or more control units (10) configured to perform one or more functions, and wherein the vehicle's on-board diagnostic system comprises one or more components, adapted to perform the steps of:
Importing control unit description files of the on-board diagnostic system, wherein the control unit description files specify the relevant data objects of one or more control units (10);
Importing communication files of the on-board diagnostic system, wherein each communication file specifies signal transmit parameters and signal receive parameters of one or more control units (10) and/or one or more components of the on-board diagnostic system;
Performing text analysis on the imported control unit description files and the communication files;
Identifying control units (10), components, functions (48), and signals (50) of the vehicle's on-board diagnostic system from the results of the text analysis; and
creating a map of the vehicle's on-board diagnostic system, wherein the map comprises the identified control units (10), functions (48), components, and signals (50) of the vehicle's on-board diagnostic system, wherein the method comprising the steps of:
a) providing the map of the on-board diagnostic system;
b) receiving a diagnostic-relevant signal from an upstream control unit (10);
c) marking the upstream control unit (10) as diagnostic-relevant;
d) marking all control units (10), components, functions (48), and signals (50) directly associated with generating the diagnostic-relevant signal (54) and the control unit (10) marked in step c) as diagnostic-relevant;
e) Repeat steps b) to d), provided that at least one further control device (10) was marked as diagnostic-relevant in step d); or alternatively
f) Locate the origin of the diagnostic-relevant signal (54) by tracing.

2. Method (30) according to claim 1, wherein the method further comprises the step of:
Displaying the map on a screen.

3. Method (30) according to any one of the preceding claims, wherein the method further comprises the step of: Generating a report containing a result of the automatic analysis.

4. Method (30) according to any one of the preceding claims, wherein the method further comprises the step of: Identifying all diagnoses that can be performed by the on-board diagnostic system.

5. Method (30) according to claim 4, wherein the method further comprises the steps of:
Comparing the diagnoses that can be performed by the on-board diagnostic system with one or more target diagnoses; and identifying the differences.

6. Method (30) according to any one of the preceding claims, wherein the method further comprises the step of: Performing a relevance assessment for the on-board diagnostics of all components, control units (10), functions (48), and signals (50).

7. Method (30, 62) according to any one of the preceding claims, wherein the text analysis is performed using artificial intelligence.

8. Method (30, 62) according to any one of claims 1 to 6, wherein the text analysis is performed using a genetic algorithm.

9. Device comprising means for carrying out the method (30, 62) according to any one of claims 1 to 8.

10. Computer program comprising instructions that, when executed by a computer, cause the computer to perform the steps of the method according to any one of claims 1 to 8.

11. Computer-readable medium on which a computer program according to claim 10 is stored.

## Revendications

1. Procédé mis en œuvre par ordinateur (30) pour analyser automatiquement un système de diagnostic embarqué d'un véhicule afin de déterminer l'architecture complète dudit système de diagnostic embarqué, ledit système de diagnostic embarqué comprenant une ou plusieurs unités de commande (10) configurées pour exécuter une ou plusieurs fonctions, et comprenant en outre un ou plusieurs composants,
le procédé comprenant les étapes consistant à :
importer des fichiers de description d'unités de commande du système de diagnostic embarqué, lesdits fichiers de description d'unités de commande spécifiant des objets de données pertinents d'une ou de plusieurs unités de commande (10) ;
importer des fichiers de communication du système de diagnostic embarqué, chaque fichier de communication spécifiant des paramètres d'émission de signaux et des paramètres de réception de signaux d'une ou de plusieurs unités de commande (10) et/ou d'un ou de plusieurs composants du système de diagnostic embarqué ;
effectuer une analyse de texte sur les fichiers de description d'unités de commande importés et les fichiers de communication ;
identifier, à partir des résultats de l'analyse de texte, des unités de commande (10), des composants, des fonctions (48) et des signaux (50) du système de diagnostic embarqué du véhicule ; et
créer une carte du système de diagnostic embarqué du véhicule, ladite carte comprenant les unités de commande (10), les fonctions (48), les composants et les signaux (50) identifiés,
**caractérisé en ce que** le procédé comprend en outre les étapes consistant à :
a) fournir la carte du système de diagnostic embarqué ;
b) recevoir un signal pertinent pour le diagnostic provenant d'une unité de commande amont (10) ;
c) marquer l'unité de commande amont (10) comme pertinente pour le diagnostic ;
d) marquer comme pertinents pour le diagnostic toutes les unités de commande (10), les composants, les fonctions (48) et les signaux (50) directement associés à la génération du signal pertinent pour le diagnostic (54) ainsi qu'à l'unité de commande (10) marquée à l'étape c) ;
e) répéter les étapes b) à d) pour autant qu'au moins une autre unité de commande (10) ait été marquée comme pertinente pour le diagnostic à l'étape d) ; ou, alternativement,
f) localiser l'origine du signal pertinent pour le diagnostic (54) par traçage.

2. Procédé (30) selon la revendication 1, dans lequel le procédé comprend en outre l'étape suivante : Affichage de la carte sur un écran.

3. Procédé (30) selon l'une quelconque des revendications précédentes, dans lequel le procédé comprend en outre l'étape de : Générer un rapport contenant un résultat de l'analyse automatique.

4. Procédé (30) selon l'une quelconque des revendications précédentes, dans lequel le procédé comprend en outre l'étape suivante : identifier tous les diagnostics pouvant être effectués par le système de diagnostic embarqué.

5. Procédé (30) selon la revendication 4, dans lequel le procédé comprend en outre les étapes suivantes : Comparer les diagnostics pouvant être effectués par le système de diagnostic embarqué avec un ou plusieurs diagnostics cibles ; et Identifier les différences.

6. Procédé (30) selon l'une quelconque des revendications précédentes, dans lequel le procédé comprend en outre l'étape suivante : Effectuer une évaluation de la pertinence du diagnostic embarqué de tous les composants, unités de commande (10), fonctions (48) et signaux (50).

7. Procédé (30, 62) selon l'une quelconque des revendications précédentes, dans lequel l'analyse de texte est effectuée à l'aide de l'intelligence artificielle.

8. Procédé (30, 62) selon l'une quelconque des revendications 1 à 6, dans lequel l'analyse de texte est effectuée à l'aide d'un algorithme génétique.

9. Dispositif comprenant des moyens pour mettre en œuvre le procédé (30, 62) selon l'une quelconque des revendications 1 à 8.

10. Programme informatique comprenant des instructions qui, lorsqu'elles sont exécutées par un ordinateur, amènent celui-ci à effectuer les étapes de la méthode selon l'une quelconque des revendications 1 à 8.

11. Support lisible par ordinateur sur lequel est stocké un programme informatique selon la revendication 10.
